# EUROPÄISCHE PATENTSCHRIFT

(11) **EP 3 794 247 B1**
(45) Veröffentlichungstag und Bekanntmachung des Hinweises auf die Patenterteilung: **19.06.2024**
(21) Anmeldenummer: 19722791.1
(22) Anmeldetag: 25.04.2019
(51) Int. Cl.: F16D 55/08, F16D 55/22, F16D 65/08, F16D 65/092, F16D 65/12, F16D 65/18, H02K 7/102, F16D 65/00, B60B 27/00, F16F 15/12, F16D 121/14, F16D 55/00

(54) **BREMSANORDNUNG FÜR EINEN ELEKTROMOTOR**
BRAKE ASSEMBLY FOR AN ELECTRIC MOTOR
SYSTÈME DE FREINAGE POUR MOTEUR ÉLECTRIQUE

(30) Priorität: 14.05.2018 DE 102018003843
(43) Veröffentlichungstag der Anmeldung: 24.03.2021
(73) Patentinhaber: SEW-EURODRIVE GmbH & Co. KG, 76646 Bruchsal (DE)
(72) Erfinder: FICHTNER-PFLAUM , Gerolf, 76703 Kraichtal-Unteröwisheim (DE); RIEGER, Florian, 76227 Karlsruhe (DE)
(86) Internationale Anmeldenummer: PCT/EP2019/025127
(87) Internationale Veröffentlichungsnummer: WO 2019/219242

(56) Entgegenhaltungen:
- DE-A1-102008 028 605
- DE-A1-102012 019 001
- DE-A1-102012 019 415
- DE-B4-102012 019 001

## Beschreibung

Die Erfindung betrifft eine Bremsanordnung für einen Elektromotor.

Es ist allgemein bekannt, dass Bremsmotoren einen Elektromotor mit einer Bremse aufweisen.

**Aus der** EP 0 957 281 A2 **ist eine elektromagnetisch betätigbare Bremse bekannt.**

**Aus der** DE 10 2012 205 580 A1 **ist ein Halter zur Befestigung einer Komponente an einer Brennkraftmaschine und eine Lagerbuchse für solch einen Halter bekannt.**

**Aus der** DE 10 2008 028605 A1 **als nächstliegender Stand der Technik ist ein Elektromotor mit Bremse bekannt.**

**Aus der** DE 10 2012 019 001 A1 **ist eine elektromagnetisch betätigbare Bremsanordnung und ein Elektromotor bekannt.**

Der Erfindung liegt daher die Aufgabe zugrunde, eine Bremsanordnung für einen Elektromotor weiterzubilden, wobei die Winkelerfassung einer Rotorwelle des Elektromotors mit hoher Genauigkeit ausführbar sein soll.

Erfindungsgemäß wird die Aufgabe bei der Bremsanordnung für einen Elektromotor nach den in Anspruch 1 angegebenen Merkmalen gelöst.

Wichtige Merkmale der Erfindung bei der Bremsanordnung für einen Elektromotor sind, dass die Bremsanordnung
- einen Bremsbelagträger,
- eine Welle,
- einen Magnetkörper,
- eine Wicklung,
- ein Gehäuseteil mit Bremsfläche und
- eine Ankerscheibe
aufweist,
wobei der Bremsbelagträger und die Ankerscheibe axial zwischen dem Gehäuseteil und dem Magnetkörper angeordnet sind,
wobei ein Dichtungselement in einem ersten axialen Bereich mit dem Gehäuseteil und in einem zweiten axialen Bereich mit dem Magnetkörper verbunden ist,
wobei das Dichtungselement die Ankerscheibe und den Bremsbelagträger radial umgibt, insbesondere den die Ankerscheibe und den Bremsbelagträger aufnehmenden Raumbereich zur Umgebung hin abdeckt und/oder abdichtet,
wobei am Dichtungselement ein nach radial innen hervorragender Nasenbereich ausgeformt ist, welcher die Ankerscheibe in axialer Richtung begrenzt.

Von Vorteil ist dabei, dass das Dichtungselement einerseits als Abdichtung gegen das Eindringen von Schmutz fungiert und andererseits als die Bewegung der Ankerscheibe, insbesondere das Auftreffen der Ankerscheibe auf den Bremsbelagträger, dämpfendes Element. Dabei ist am aus Kunststoff oder Gummi gefertigtem Dichtungselement der Nasenbereich einstückig, also einteilig ausgeformt. Das Dichtungselement ist ringartig ausgeformt, ebenso ist der Nasenbereich ringartig ausgeformt.

Bei einer vorteilhaften Ausgestaltung ist am Magnetkörper ein Dichtring angeordnet, welcher die Ankerscheibe entgegen der axialen Richtung begrenzt,
insbesondere wobei der Dichtring in einer im Magnetkörper eingebrachten Ringnut aufgenommen ist,
insbesondere wobei die Ringachse die Drehachse der Welle ist. Von Vorteil ist dabei, dass auch auf der vom Nasenbereich abgewandten Seite der Ankerscheibe ein die Bewegung der Ankerscheibe dämpfendes Element angeordnet ist.

Bei einer vorteilhaften Ausgestaltung ist die vom Dichtring erzeugte, auf die Ankerscheibe wirkende Federkraft betragsmäßig größer als die vom elastisch gespannten, insbesondere vorgespannten, Nasenbereich erzeugte, auf die Ankerscheibe wirkende Federkraft,
insbesondere bei gelüftetem Zustand der Bremsanordnung, insbesondere also bestromter Wicklung. Von Vorteil ist dabei, dass die Rückstellwirkung der Feder nicht verringert wird und somit die Funktionsweise der Bremsanordnung gegebenenfalls verlangsamt aufrechterhalten wird.

Bei einer vorteilhaften Ausgestaltung überlappt der vom Dichtungselement, insbesondere vom Nasenbereich des Dichtungselements, überdeckte Radialabstandsbereich mit dem von der Ankerscheibe überdeckten Radialabstandsbereich. Von Vorteil ist dabei, dass die Ankerscheibe an dem Nasenbereich ansteht und somit eine elastische Kraft in die Ankerscheibe eingeleitet wird.

Bei einer vorteilhaften Ausgestaltung überlappt der vom Dichtungselement, insbesondere vom Nasenbereich des Dichtungselements, überdeckte axiale Bereich mit dem von dem Bremsbelagträger überdeckten axialen Bereich und/oder grenzt an den von der Ankerscheibe überdeckten axialen Bereich an, insbesondere ohne Überlappung. Von Vorteil ist dabei, dass eine kompakte Anordnung erreichbar ist. Dabei ist der Bremsbelagträger radial weniger ausgedehnt als die Ankerscheibe. In den freien Raumbereich radial außerhalb des Bremsbelagträgers ist also der Nasenbereich anordenbar. Somit ist eine möglichst kompakte Ausführung erreicht.

Bei einer vorteilhaften Ausgestaltung ist die Ringachse des Dichtrings die Drehachse der Welle. Von Vorteil ist dabei, dass die Ankerscheibe an dem zu ihrer Stirnseite parallel angeordneten Dichtring, insbesondere O-Ring, ein gleichmäßiges Anliegen erreichbar ist.

Bei einer vorteilhaften Ausgestaltung ist der Nasenbereich ringförmig und/oder in Umfangsrichtung umlaufend ausgebildet, insbesondere wobei die Ringachse des ringartigen Nasenbereichs die Drehachse der Welle ist und/oder insbesondere wobei die Symmetrieachse des Nasenbereichs die Drehachse der Welle ist. Von Vorteil ist dabei, dass das Dichtungselement und der Nasenbereich in Umfangsrichtung umlaufend ausgebildet sind und somit eine einfache Herstellung ermöglicht ist, insbesondere als Strangprofil.

Bei einer vorteilhaften Ausgestaltung ist das Ringteil auf einem Radialabstand, insbesondere auf dem größten Radialabstand, angeordnet, welcher in dem von der Ankerscheibe überdeckten Radialabstandsbereich angeordnet ist. Von Vorteil ist dabei, dass eine möglichst effektive Abdämpfung erreichbar ist.

**Erfindungsgemäß** weist ferner die Bremsanordnung
-
- einen Mitnehmer
auf,
wobei der Mitnehmer ein inneres und ein äußeres Mitnehmerteil aufweist, welche mittels einer Zwischenschicht miteinander verbunden sind,
wobei der Bremsbelagträger eine Innenverzahnung aufweist, welche mit einer Außenverzahnung des äußeren Mitnehmerteils im Eingriff ist, so dass der Bremsbelagträger drehfest aber axial verschiebbar mit dem Mitnehmer, verbunden ist,
wobei das innere Mitnehmerteil drehfest, insbesondere mittels Passfederverbindung, mit der Welle verbunden ist, insbesondere spielfrei verbunden ist.

Bei einer vorteilhaften Ausgestaltung ist das innere Mitnehmerteil, das äußere Mitnehmerteil, die Zwischenschicht und/oder der Mitnehmer jeweils als Ringteil ausgeführt.

Insbesondere ist die axiale Richtung parallel zur Richtung der Drehachse ausgerichtet.

Von Vorteil ist dabei, dass ein Drehmomentruck nur abgedämpft in die Welle eingeleitet wird und somit die Winkelerfassung der Welle ungestört ausführbar ist.

Bei einer vorteilhaften Ausgestaltung weist der Mitnehmer ein inneres Mitnehmerteil und ein äußeres Mitnehmerteil sowie eine radial zwischen innerem und äußerem Mitnehmerteil angeordnete Zwischenschicht auf,
insbesondere wobei das innere Mitnehmerteil und das äußere Mitnehmerteil voneinander beabstandet sind und/oder wobei das innere und das äußere Mitnehmerteil jeweils ringförmig ausgebildet ist und/oder wobei das innere Mitnehmerteil radial innerhalb des äußeren Mitnehmerteils angeordnet ist. Von Vorteil ist dabei, dass eine Dämpfung von Drehmomentrucken und/oder durch den Mitnehmer durchgeleiteten Drehmomentflüssen ermöglicht ist. in Zusammenwirkung mit der Dämpfung von in Umfangsrichtung von der Ankerscheibe zum Gehäuseteil und/oder Magnetkörper hin eingeleiteten Stößen ist ein hoher Schutz für einen an dem Motor angeordneten Winkelsensor, insbesondere eine mit der Rotorwelle drehfest verbundene Sensorwelle erreicht. Die Winkelerfassung ist also robust gegen störende Einflüsse ausführbar, welche beim Betrieb der elektromagnetisch betätigbaren Bremse erzeugt werden.

Bei einer vorteilhaften Ausgestaltung weist das innere Mitnehmerteil nach radial außen, insbesondere in die Zwischenschicht, hervorragende Stegbereiche auf. Von Vorteil ist dabei, dass die Zwischenschicht elastischer und/oder weicher ausführbar ist als die beiden Mitnehmerteile. Somit ist eine Dämpfung durch die Zwischenschicht durchgeleiteter Kraftflüsse und/oder Drehmomentflüsse erreichbar.

Bei einer vorteilhaften Ausgestaltung weist das äußere Mitnehmerteil nach radial innen, insbesondere in die Zwischenschicht, hervorragende Stegbereiche auf. Von Vorteil ist dabei, dass die Zwischenschicht weicher als das äußere und/oder innere Mitnehmerteil ausführbar ist. Somit ist eine Dämpfung durch die Zwischenschicht durchgeleiteter Kraftflüsse und/oder Drehmomentflüsse erreichbar.

Bei einer vorteilhaften Ausgestaltung ist die Zwischenschicht aus einem Kunststoff, insbesondere aus einem Polymer und/oder aus einem Elastomer, gefertigt und/oder die beiden
Mitnehmerteile sind aus Metall, insbesondere Stahl, gefertigt. Von Vorteil ist dabei, dass eine kostengünstige einfache Dämpfung vorsehbar ist.

Bei einer vorteilhaften Ausgestaltung überlappt der von dem äußeren Mitnehmerteil, insbesondere der von den Stegbereichen des äußeren Mitnehmerteils, überdeckte Radialabstandsbereich mit dem von dem inneren Mitnehmerteil, insbesondere mit dem von den Stegbereichen des inneren Mitnehmerteils, überdeckten Radialabstandsbereich. Von Vorteil ist dabei, dass bei Versagen der Zwischenschicht ein in Umfangsrichtung wirksamer, spielbehafteter Formschluss zwischen den beiden Mitnehmerteilen wirksam wird. Somit wird dann bei Zustandsänderung der Bremsanordnung, insbesondere also beim Lüften oder Einfallen der Bremsanordnung, ein Geräusch infolge Aufeinandertreffens der Flanken der Stegbereiche erzeugt, also ein akustisches Warnsignal.

Bei einer vorteilhaften Ausgestaltung weist das äußere Mitnehmerteil an seiner radial äußeren Oberfläche eine Verzahnung, insbesondere Außenverzahnung, auf, welche mit der Innenverzahnung des Bremsbelagträgers im Eingriff ist. Von Vorteil ist dabei, dass der Mitnehmer insgesamt mehrteilig ausgeführt ist, insbesondere also Verbundteil. Dabei ist aber die äußere Abmessung wie bei einem einteilig ausgeführten Mitnehmer ausgeführt. Ein bekannter einteiliger Mitnehmer ist also in einfacher Weise durch einen mehrteilig ausgeführten Mitnehmer ersetzbar, wobei dadurch die verbesserte Dämpfung erreichbar ist.

Bei einer vorteilhaften Ausgestaltung ist die Welle in dem im Flanschteil aufgenommenen Lager und in einem weiteren Lager gelagert, welches in einem weiteren Flanschteil aufgenommen ist, wobei die Flanschteile mit einem Statorgehäuse des Motors verbunden sind,
insbesondere wobei die Welle die Rotorwelle des Motors ist.

Von Vorteil ist dabei, dass die Welle zwar drehgelagert angeordnet ist, bei Lüften oder einfallen der Bremsanordnung jedoch Stöße in die Welle eingeleitet werden, so dass B-seitig, also auf der vom Stator abgewandten Seite der Bremsanordnung ein Winkelsensor bei der Erfassung der Winkelstellung der Rotorwelle störbar wäre, wenn die Erfindung nicht mittels der im Vergleich zur zweiten Buchse weicheren ersten Buchse Stöße abdämpfbar machen würde.

Bei einer vorteilhaften Ausgestaltung weist die Bremsanordnung zusätzlich
- zumindest einen Bolzen
- zumindest ein Federteil, insbesondere eine Gegenfeder,
- zumindest eine erste Buchse
auf,
wobei das Gehäuseteil mit dem Magnetkörper mittels des Bolzens, insbesondere zumindest in Umfangsrichtung formschlüssig, verbunden ist,
wobei die erste Buchse in einer zweiten Buchse aufgenommen ist, insbesondere in die zweite Buchse eingepresst ist,
wobei das am Gehäuseteil abgestützte Federteil die erste Buchse und/oder die zweite Buchse zum Magnetkörper hindrückt,
wobei der von der Ankerscheibe überdeckte Radialabstandsbereich den von der zweiten Buchse überdeckten Radialabstandsbereich enthält, insbesondere umfasst,
wobei der von der Ankerscheibe überdeckte axiale Bereich den von der zweiten Buchse überdeckten axialen Bereich enthält, insbesondere umfasst, oder mit ihm überlappt.

Von Vorteil ist dabei, dass die Ankerscheibe in Umfangsrichtung drehfest mit dem Magnetkörper verbunden ist, indem sie an der zweiten Buchse in Umfangsrichtung gestoppt wird. Die zweite Buchse überträgt den Aufschlagstoß über die erste Buchse an den Bolzen und dieser an den Magnetkörper sowie das Gehäuseteil. Somit ist der Aufschlagstoß mittels der elastischen Ausführung der ersten Buchse abdämpfbar. Gleichzeitig fungiert die erste Buchse als axiales Gleitlager der Buchsenkombination, also der beiden pressverbundenen Buchsen, also der ersten und der zweiten Buchse.

Bei einer vorteilhaften Ausgestaltung ist die erste Buchse aus einem weicheren und/oder elastischeren Material gefertigt als die zweite Buchse. Von Vorteil ist dabei, dass der Stoß abdämpfbar ist und ein Gleitlager in axialer Richtung bereit stellbar ist, so dass bei Nachstellen der Mutter infolge Abnutzung der Bremsbeläge eine geringe Haftreibung vorhanden ist und Korrosion vermeidbar ist. Denn die Bolzen sind aus Metall, die erste Buchse jedoch ist aus Kunststoff.

Bei einer vorteilhaften Ausgestaltung ist die erste Buchse aus Gummi, einem gummierten Stoff oder einem Kunststoff, insbesondere einem Polymer, gefertigt und die zweite Buchse aus einem Metall, insbesondere aus Stahl, gefertigt. Von Vorteil ist dabei, dass ein Abdämpfen des Aufschlags der Ankerscheibe auf die zweite Buchse ermöglicht ist.

Bei einer vorteilhaften Ausgestaltung ist die erste Buchse in die zweite Buchse eingepresst,
insbesondere wobei die erste Buchse ein O-Ring ist. Von Vorteil ist dabei, dass eine feste Verbindung vorhanden ist. Außerdem sind durch die Buchsenkombination mehrere Funktionen ausführbar, wie Gleitlager, Aufschlagsdämpfung und stabile äußere Oberfläche.

Bei einer vorteilhaften Ausgestaltung ist die erste Buchse am Bolzen gleitgelagert, insbesondere also passgenau auf den Bolzen aufgesteckt ist. Von Vorteil ist dabei, dass eine Abdämpfung von Stößen und eine Gleitlagerung von der Buchsenkombination bewirkbar ist. Außerdem schlägt die Ankerscheibe an der zweiten Buchse an, welche aus einem stabilen Material fertigbar ist, das keine wesentliche Dämpfung bewirkt, aber eine hohe Standzeit erreichbar macht. Die Abdämpfung von Stößen wird von der ersten Buchse ausgeführt, die in der zweiten Buchse aufgenommen und/oder eingepresst ist.

Bei einer vorteilhaften Ausgestaltung ist die Ankerscheibe in Umfangsrichtung spielbehaftet formschlüssig mit der zweiten Buchse und/oder dem Bolzen verbunden. Von Vorteil ist dabei, dass die Ankerscheibe radial weiter ausgedehnt ist als der Bremsbelagträger und in dem radial überragenden Radialabstandsbereich der Bolzen angeordnet ist. Somit ist der Bolzen durch eine axial durch die Ankerscheibe durchgehende Ausnehmung durchführbar. Auf diese Weise ist der Bremsbelagträger in Umfangsrichtung mit der Welle frei drehbar angeordnet und die Ankerscheibe in Umfangsrichtung formschlüssig angeordnet.

Bei einer vorteilhaften Ausgestaltung ist der Bolzen mit dem Gehäuseteil schraubverbunden und ist durch eine axial durch den Magnetkörper durchgehende Ausnehmung durchgeführt,
insbesondere wobei eine Mutter auf einen Gewindebereich aufgeschraubt ist, welcher auf der vom Gehäuseteil abgewandten Seite des Magnetkörpers angeordnet ist,
insbesondere wobei der Bolzen eine Stufe aufweist, mit welcher er an einer Stufe einer Stufenbohrung im Gehäuseteil anliegt. Von Vorteil ist dabei, dass bei Verschleiß der Bremsbeläge die Bremsanordnung nachstellbar ist, also der axiale Abstand zwischen Magnetkörper und Gehäuseteil anpassbar ist, wobei die Betätigung der Nachstellung, also der Mutter, von der B-Seite her ausführbar ist.

Bei einer vorteilhaften Ausgestaltung ist der Bolzen mit dem Magnetkörper schraubverbunden und durch eine axial durch das Gehäuseteil durchgehende Ausnehmung durchgeführt,
insbesondere wobei eine Mutter auf einen Gewindebereich aufgeschraubt ist, welcher auf der vom Magnetkörper abgewandten Seite des Gehäuseteils angeordnet ist,
insbesondere wobei der Bolzen eine Stufe aufweist, mit welcher er an einer Stufe einer Stufenbohrung im Magnetkörper anliegt. Von Vorteil ist dabei, dass bei Verschleiß der Bremsbeläge die Bremsanordnung nachstellbar ist, also der axiale Abstand zwischen Magnetkörper und Gehäuseteil anpassbar ist, wobei die Betätigung der Nachstellung, also der Mutter, von der B-Seite her ausführbar ist.

Bei einer vorteilhaften Ausgestaltung ist in einer Ausnehmung des Magnetkörpers die Wicklung aufgenommen und/oder die Ankerscheibe ist axiale bewegbar, spielbehaftet drehfest mit dem Magnetkörper, insbesondere mit dem Bolzen, verbunden. Von Vorteil ist dabei, dass möglichst wenig Feldlinien verloren gehen.

Bei einer vorteilhaften Ausgestaltung drückt eine am Magnetkörper abgestützte Feder die Ankerscheibe vom Magnetkörper weg, insbesondere also in axialer Richtung hin zum Bremsbelagträger,
wobei bei Bestromung der Ringwicklung die Ankerscheibe zum Magnetkörper unter Überwindung der von der Feder erzeugte Federkraft hingezogen wird,
und wobei bei Nichtbestromung die Ankerscheibe von der Feder auf den Bremsbelagträger, insbesondere auf einen auf der der Ankerscheibe zugewandten Seite des Bremsbelagträgers angeordneten Bremsbelag gedrückt wird,
insbesondere so, dass der Bremsbelagträger insbesondere mit seinem anderen Bremsbelag auf das Gehäuseteil, insbesondere auf eine am Gehäuseteil ausgebildete Bremsfläche, gedrückt wird. Von Vorteil ist dabei, dass bei Nichtbestromung die elektromagnetisch betätigbare Bremsanordnung einfällt. Bei Bestromung wird jedoch die Bremsanordnung gelüftet.

Bei einer vorteilhaften Ausgestaltung wird das Gehäuseteil mit einem Flanschteil dicht und lösbar verbunden, welches ein Lager zur Lagerung der Welle aufnimmt. Von Vorteil ist dabei, dass die elektromagnetisch betätigbare Bremse als vorkomplettierte Einheit lagerbar und danach mit dem Motor verbindbar ist.

Bei einer vorteilhaften Ausgestaltung ist der von der zweiten Buchse überdeckte axiale Bereich kleiner als der von der ersten Buchse überdeckte axiale Bereich und das Federteil drückt die erste Buchse auf den Magnetkörper hin. Von Vorteil ist dabei, dass der von der Ankerscheibe übertragene Stoß in Umfangsrichtung vom härteren Material aufnehmbar ist und somit eine hohe Standzeit erreichbar ist. außerdem drückt das Federteil die erste Buchse an, so dass das von der Ankerscheibe gestoßene Teil, also die zweite Buchse, nicht zusätzlich begrenzt und/oder belastet ist.

Bei einer vorteilhaften Ausgestaltung ist der von der zweiten Buchse überdeckte axiale
Bereich gleich oder größer als der von der ersten Buchse überdeckte axiale Bereich und das Federteil drückt die zweite Buchse auf den Magnetkörper hin. Von Vorteil ist dabei, dass die Funktion der Gleitlagerung und der Stoßabdämpfung von der ersten Buchse ausgeführt wird, während die zweite Buchse auf den Magnetkörper gedrückt wird. Somit wird der in Umfangsrichtung in die zweite Buchse eingeleitete Stoß auch zumindest anteilig von der bei relativer Verschiebung der ersten Buchse in Umfangsrichtung wirksamen Haftreibung und Gleitreibung des Reibkontaktes der zweiten Buchse mit dem Magnetkörper beziehungsweise dem Federteil abgeleitet. Die erste Buchse muss also nur restliche Stoßenergie abdämpfen.

Die Erfindung wird nun anhand von schematischen Abbildungen näher erläutert:
In der Figur 1 ist eine elektromagnetisch betätigbare Bremsanordnung eines Elektromotors angeschnitten in Schrägansicht dargestellt.
In der Figur 2 ist ein vergrößerter Ausschnitt der Figur 1 dargestellt.
In der Figur 3 ist eine zugehörige Schrägansicht ohne Anschnitt gezeigt.
In der Figur 4 ist eine weitere elektromagnetisch betätigbare Bremsanordnung eines Elektromotors angeschnitten in Schrägansicht dargestellt, wobei ein Mitnehmer (41, 42, 43) mehrteilig ausgeführt ist.
In der Figur 5 ist der Mitnehmer (41, 42, 43) in Schrägansicht dargestellt.
In der Figur 6 ist eine erfindungsgemäße elektromagnetisch betätigbare Bremsanordnung eines Elektromotors angeschnitten in Schrägansicht dargestellt, wobei ein Dichtungselement 60 mittels eines nach radial innen hervorstehenden Nasenbereichs 61 eine rückstellende Kraft auf die Ankerscheibe 9 ausübt.
In der Figur 7 ist ein Ausschnitt der Figur 6 vergrößert dargestellt.

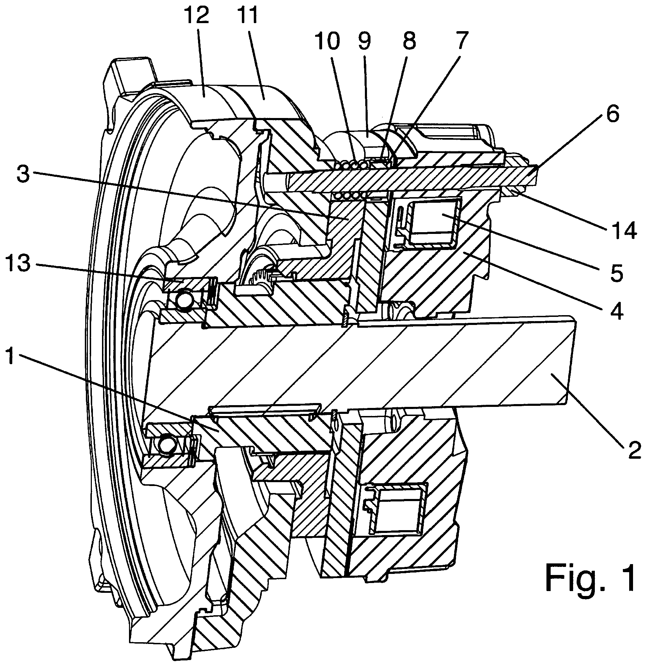

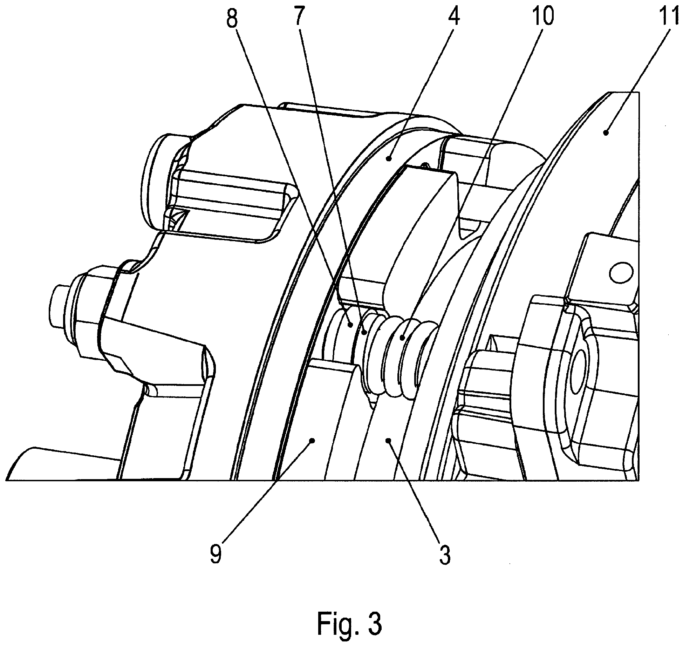

Wie in den Figuren 1 bis 3 dargestellt, weist die Bremsanordnung eine Welle, insbesondere Rotorwelle 2 des Elektromotors, auf, wobei auf der Welle ein ringförmiger Mitnehmer 1 aufgeschoben ist und mittels Passfederverbindung drehfest verbunden ist.

Der Mitnehmer 1 weist an seinem Außenumfang eine Verzahnung, insbesondere Außenverzahnung auf. Vorzugsweise weist die Außenverzahnung keinen Schrägungswinkel auf, ist also geradverzahnt, so dass sich die Zähne jeweils in axialer Richtung erstrecken.

Auf den Mitnehmer 1 ist ein Bremsbelagträger 3 aufgeschoben, der eine Innenverzahnung aufweist, welche mit der Außenverzahnung im Eingriff ist. somit ist der Bremsbelagträger 3 drehfest, aber axial verschiebbar mit dem Mitnehmer 1 verbunden.

Der Bremsbelagträger 3 weist axial beidseitig Bremsbeläge auf.

Ein Magnetköper 4, insbesondere aus Stahlguss, weist eine ringförmige Ausnehmung auf, in welche eine Ringwicklung 5 eingelegt ist.

Axial gerichtete Bolzen 6, insbesondere Gewindebolzen, sind durch axial durch den Magnetkörper 4 durchgehende Ausnehmungen geführt und mit ihrem Gewindebereich in Gewindebohrungen eines Gehäuseteils 11 eingeschraubt.

Auf der vom Gehäuseteil 11 abgewandten Seite des Magnetkörpers 4 ist auf einen weiteren Gewindebereich der Bolzen 6 jeweils eine Mutter 6 aufgeschraubt, so dass der Magnetkörper auf einen maximalen Abstand zum Gehäuseteil 11 begrenzt ist.

Eine jeweilige am Gehäuseteil 11 abgestützte Gegenfeder, insbesondere Spiralfeder, ist auf den Bolzen 6 aufgesteckt. Und drückt auf eine erste Buchse 7, insbesondere Kunststoffbuchse.

Die erste Buchse ist in eine etwas größere Zweite Buchse 8 eingepresst, welche aus einem anderen Material gefertigt ist als die erste Buchse.

Hierbei wird die zweite Buchse 8 bevorzugt aus Metall gefertigt, insbesondere aus Stahl.

Somit drückt also die Gegenfeder 10 die erste Buchse 7 auf das Gehäuseteil 4.

Eine Ankerscheibe 9 ist axial zwischen dem Bremsbelagträger 3 und dem Magnetkörper 4 angeordnet.

Der von der Ankerscheibe überdeckte Radialabstand umfasst den von den Bolzen 6 samt den auf die Bolzen aufgesteckten ersten Buchsen 7 mit zweiten Buchsen 8 überdeckten Radialabstandsbereich.

Somit ragen also die Bolzen 6 samt den auf die Bolzen 6 aufgesteckten ersten Buchsen 7 zusammen mit den die ersten Buchsen 7 aufnehmenden zweiten Buchsen 8 axial durch durch die Ankerscheibe 4 durchgehende Ausnehmungen hindurch.

Auf diese Weise ist die Ankerscheibe 9 zwar spielbehaftet drehfest mit dem Magnetkörper verbunden, aber axial bewegbar angeordnet.

Eine in den Figuren nicht dargestellte, am Magnetkörper abgestützte Feder drückt die Ankerscheibe 9 weg vom Magnetkörper 4, insbesondere also in axialer Richtung hin zum Bremsbelagträger 3.

Bei Bestromung der Ringwicklung 5 wird die Ankerscheibe 9 zum Magnetkörper 4 hingezogen, wobei die Ankerscheibe 9 die von der Feder erzeugte Federkraft überwindet.

Bei Nichtbestromung wird die Ankerscheibe 9 von der Feder auf den Bremsbelagträger 3, insbesondere auf einen auf der der Ankerscheibe 9 zugewandten Seite des Bremsbelagträgers 3 angeordneten Bremsbelag gedrückt, so dass der Bremsbelagträger 3 insbesondere mit seinem anderen Bremsbelag auf das Gehäuseteil 11, insbesondere auf eine am Gehäuseteil 11 ausgebildete Bremsfläche, gedrückt wird.

Der von dem Bremsbelagträger 3 überdeckte Radialabstandsbereich ist beabstandet von dem von den Bolzen 6 überdeckten Radialabstandsbereich.

Vorzugsweise sind die Bolzen 6 in Umfangsrichtung regelmäßig voneinander beabstandet und auf jeweils demselben Radialabstand angeordnet.

Ein in den Figuren nicht dargestelltes Dichtungselement, insbesondere aus Gummi, deckt den Bereich zwischen Magnetkörper 4 und Gehäuseteil 11 zur Umgebung hin ab. Dabei umgibt das Dichtungselement die Ankerscheibe 8 radial außen, ist also in dem von der Ankerscheibe 9 überdeckten axialen Bereich auf größerem Radialabstand angeordnet als die Ankerscheibe 9, insbesondere also radial beabstandet von der Ankerscheibe 9.

Da die erste Buchse 7 aus einem weicheren Material gefertigt ist als die zweite Buchse 8, schlägt die Ankerscheibe 9 beim Einfallen der Bremsanordnung oder beim Lüften der Bremsanordnung an die zweite Buchse 8 an, wobei dieser Stoß dann an die erste Buchse 7 weitergeleitet wird und von der ersten Buchse 7 abgedämpft wird. Außerdem ist die erste Buchse auf den metallisch ausgeführten Bolzen 6 angeordnet und daher gleitgelagert.

Vorzugsweise wird daher als Material für die ersten Buchsen 7 ein Polymer gewählt oder ein Elastomer.

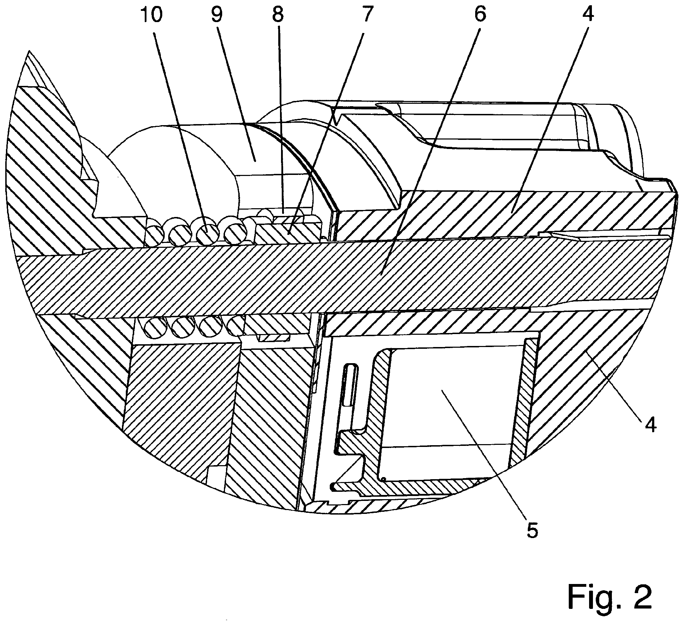

In dem in den Figuren 1 und 2 gezeigten Ausführungsbeispiel ist die erste Buchse 7 axial weniger ausgedehnt als die zweite Buchse 8.

Bei zunehmendem Verschleiß der Bremsbeläge ist der Abstand zwischen dem Magnetkörper 4 und dem Gehäuseteil 11 mittels Drehen der Mutter 14 einstellbar. Denn der Bolzen 6 weist eine Stufe auf, mit welcher er beim Einschrauben des Bolzens 6 in das Gehäuseteil 11 am Gehäuseteil 11 anliegt.

Insbesondere ist hier stets die axiale Richtung parallel zur Drehachsenrichtung der Welle, die Umfangsrichtung bezieht sich auf den Drehwinkel der Welle und der jeweilige Radialabstand wird bezogen auf den Abstand zur Drehachse der Welle.

Das Gehäuseteil 11 ist vorzugsweise mit einem Flanschteil 12, insbesondere Lagerflansch, des Elektromotors lösbar verbunden, wobei die Verbindung aber in hoher Schutzart, also dicht, ausgeführt ist. Dabei nimmt das Flanschteil 12 ein Lager 13 auf, welches die Welle, insbesondere Rotorwelle 2, drehbar lagert und ist mit einem Statorgehäuse des Motors verbunden, welches mit einem weiteren Flanschteil verbunden ist, welches ein weiteres Lager der Rotorwelle aufnimmt.

In einem anderen Ausführungsbeispiel ist die erste Buchse 7 axial gleich oder mehr ausgedehnt als die zweite Buchse 8. Vorzugsweise drückt die Gegenfeder 10 dabei auf die zweite Buchse 8, welche somit an den Magnetkörper 4 angedrückt wird. Die Federkraft der Gegenfeder 10 wird bei dieser Ausführung dann also im Gegensatz zu der Ausführung nach Figur 1 und 2 nicht durch die erste Buchse 7 sondern durch die zweite Buchse 8 geleitet. Die
erste Buchse 7 hat dann nur die Funktion der Gleitlagerung auf dem Bolzen 6 und der Abdämpfung des von der Ankerscheibe 9 in die zweite Buchse 7 eingeleiteten Stoßes.

Bei weiteren erfindungsgemäßen Ausführungsbeispielen wird die erste Buchse als Ring aus einem Polymer, insbesondere als O-Ring, insbesondere aus Gummi, ausgeführt. Dabei ist dann dieser Ring in die zweite Buchse 8 eingepresst, der aus Stahl ausgeführt ist.

Bei weiteren erfindungsgemäßen Ausführungsbeispielen wird also bei einer elektromagnetisch betätigbaren Bremsanordnung für einen Elektromotor die Ankerscheibe drehfest aber axial verschiebbar zu einem Bolzen angeordnet, auf den eine Kunststoffbuchse aufgesteckt ist, die in eine Metallbuchse eingepresst ist.

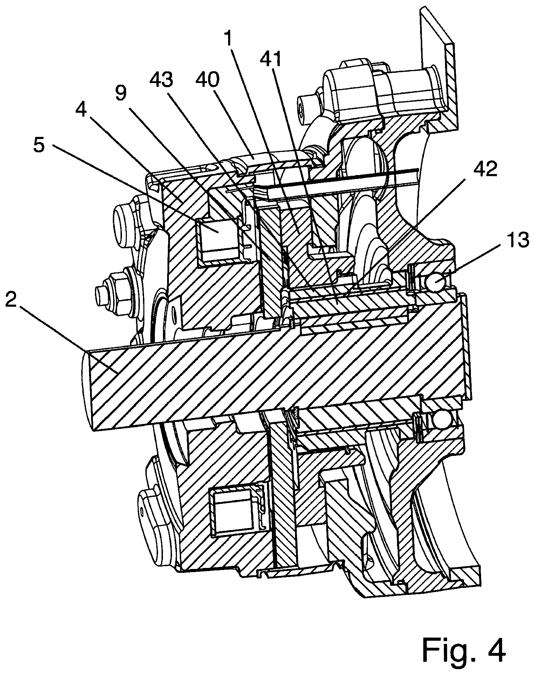

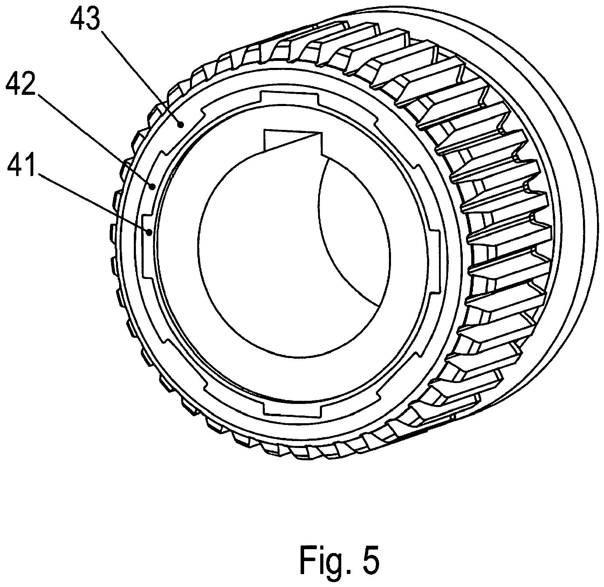

Wie in Figur 4 und 5 gezeigt, ist als alleiniger Unterschied zu den vorgenannten Ausführungsbeispielen der Mitnehmer mehrteilig ausgeführt
Außerdem ist das Dichtungselement 40 gezeigt, welches an seinem ersten axialen Endbereich mit dem Magnetkörper 4 verbunden ist und an dem anderen axialen Endbereich mit dem Gehäuseteil 11.

Das innere Mitnehmerteil 41 ist mittels Passfederverbindung mit der Welle 2 verbunden und weist nach radial außen hervorstehende, axial sich erstreckende Stegbereiche auf, welche in Umfangsrichtung voneinander vorzugsweise regelmäßig beabstandet sind.

Ein äußeres Mitnehmerteil 43 weist nach radial innen hervorstehende, axial sich erstreckende Stegbereiche auf, welche in Umfangsrichtung voneinander vorzugsweise regelmäßig beabstandet sind und auch in Umfangsrichtung beabstandet sind von den Stegbereichen des inneren Mitnehmerteils 41, aber in radialer Richtung überlappen.

Der von den Stegbereichen des äußeren Mitnehmerteils 43 überdeckte Radialabstandsbereich überlappt mit dem von den Stegbereichen des inneren Mitnehmerteils 41.

Radial zwischen dem inneren Mitnehmerteil 41 und dem äußeren Mitnehmerteil 43 ist eine Zwischenschicht 42 angeordnet, die aus einem Kunststoff, insbesondere aus einem Polymer und/oder Elastomer, besteht.

Auf diese Weise sind Drehstöße, also Drehmomentrucke, abdämpfbar. Denn wenn beispielsweise die Bremse gelüftet wird oder einfällt, wird ein Bremsmoment in die Welle, insbesondere Rotorwelle 2, eingeleitet. Dabei fließt das Drehmoment durch die
Zwischenschicht 42, so dass diese elastisch ausgelenkt wird und auch Energie absorbiert. Die Stöße sind also verminderbar.

Die Stegbereiche weisen jeweils vorzugsweise ein rechteckförmiges Profil auf. Die Stegbereiche erstrecken sich in axialer Richtung vorzugsweise ohne Schrägungswinkel.

Bei Versagen der Zwischenschicht 42 tritt der dann in Umfangsrichtung spielbehaftete Formschluss zwischen den Stegbereichen des inneren und äußeren Mitnehmerteils (41, 43) in Kraft. Somit ist die Sicherheit erhöht. Denn bei Versagen der Zwischenschicht 42 ist trotzdem die Bremsfunktion noch gewährleistbar, wobei infolge Aneinanderschlagens der Stegbereiche eine erhöhte Geräuschemission auftritt und somit ein akustisches Warnsignal erzeugt wird.

Das äußere Mitnehmerteil 43 weist an seiner radialen Außenseite die Verzahnung auf, insbesondere also diejenige Verzahnung, insbesondere Außenverzahnung, welche der Verzahnung des Mitnehmers 1 der oben beschriebenen Ausführungsbeispiele, insbesondere nach den Figuren 1 bis 3, gleicht.

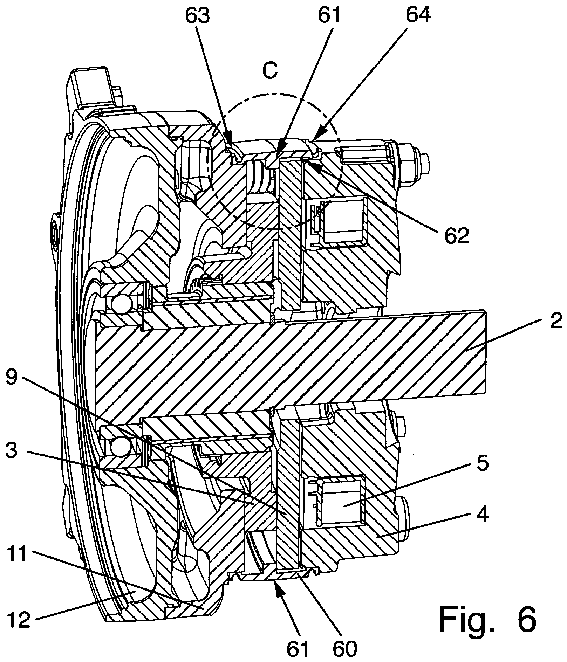

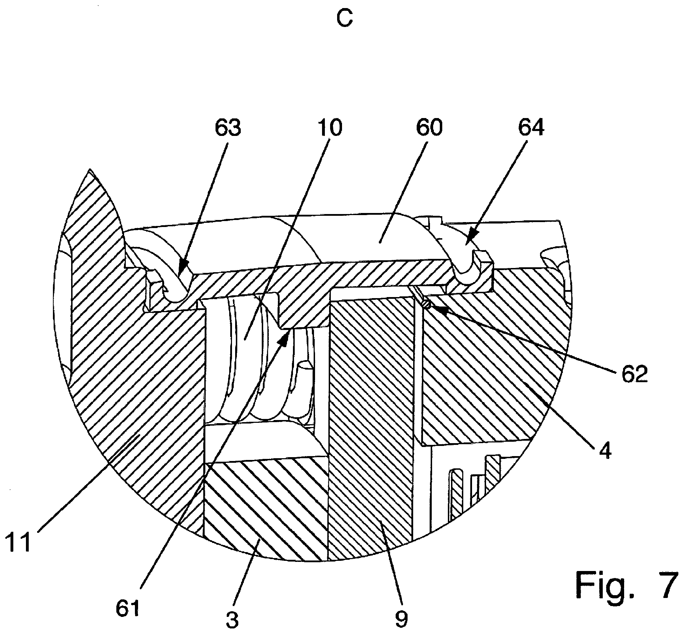

Wie in Figur 6 und 7 gezeigt, ist statt des Dichtungselements 40 ein Dichtungselement 60 zum Abdecken des Arbeitsbereichs der Ankerscheibe 9 und des Bremsbelagträgers 3 vorgesehen. Dabei weist das Dichtungselement 60 einen nach radial innen hervorstehenden Nasenbereich 61 auf, welcher die Ankerscheibe 9 in axialer Richtung elastisch begrenzt. Somit drückt also die

Ankerscheibe 9 gegen den Nasenbereich 61, wenn die Wicklung 5, insbesondere also Spule 5, nicht bestromt wird.

Wenn die Ankerscheibe 9 von der am Magnetkörper abgestützten Feder weggedrückt wird vom Magnetkörper 4, insbesondere also in axialer Richtung hin zum Bremsbelagträger 3, wirkt der Nasenbereich 61 dagegen und dämpft somit das Aufschlagen der Ankerscheibe 9 auf den Bremsbelagträger 3.

Somit ist das Anschlagen der Ankerscheibe 9 an den Bremsbelagträger 3 mittels des elastisch auslenkbaren Nasenbereichs 61 gedämpft.

Das Dichtungselement 60 samt Nasenbereich 61 überdeckt einen Radialabstandsbereich, der mit dem von der Ankerscheibe 9 überdeckten Radialabstandsbereich überlappt.

In einer ersten Vertiefung 63, insbesondere in einer ersten in Umfangsrichtung umlaufenden ringförmigen Vertiefung, des Dichtungselements 60 ist eine Schelle befestigbar, welche bei Betätigung das Dichtungselement 60 auf das Gehäuseteil 11 aufschrumpft und somit kraftschlüssig andrückt.

Ebenso ist in einer zweiten Vertiefung 64, insbesondere in einer zweiten in Umfangsrichtung umlaufenden ringförmigen Vertiefung, des Dichtungselements 60 eine Schelle befestigbar, welche bei Betätigung das Dichtungselement 60 auf den Magnetkörper 4 aufschrumpft und somit kraftschlüssig andrückt.

Am Magnetkörper 4 ist ein Dichtring 62, insbesondere O-Ring, insbesondere Kunststoff- oder Gummi-Ring, in einer in Umfangsrichtung umlaufenden Ringnut des Magnetkörpers 4 angeordnet. Dabei steht der Dichtring 62 axial zur Ankerscheibe 9 hervor, so dass auch das Anschlagen der Ankerscheibe 9 auf den Magnetkörper 4 gedämpft ist.

Der Dichtring 62 ist vorzugsweise auf einem möglichst großen Radialabstand angeordnet, wobei dieser Radialabstand in dem von der Ankerscheibe 9 überdeckten Radialabstandsbereich angeordnet ist.

Vorzugsweise sind der Dichtring 62 und der Nasenbereich 61 axial derart weit ausgedehnt ausgeführt, dass die Ankerscheibe 9 während ihres gesamten Arbeitshubs, also ununterbrochen, sowohl mit dem Dichtring 62 als auch mit dem Nasenbereich 61 in Kontakt. Auf diese Weise sind unstetige Wirkungen verringerbar.

Die Vorspannkraft, insbesondere Federkraft, des Dichtrings 62 ist zumindest bei eingefallener Bremse höher als die vom Nasenbereich 61 bewirkte Federkraft.

Somit wirkt die vom Dichtring 62 erzeugte Federkraft verstärkend zur Federkraft der Feder. Hingegen wirkt die vom Nasenbereich 61 an die Ankerscheibe eingeleitete Federkraft in entgegengesetzter Richtung.

### Bezugszeichenliste

1 Mitnehmer
2 Rotorwelle
3 Bremsbelagträger
4 Magnetkörper
5 Spule
6 Bolzen, insbesondere Gewindebolzen
7 erste Buchse, insbesondere Kunststoffbuchse
8 zweite Buchse, insbesondere Metallbuchse
9 Ankerscheibe
10 Federteil
11 Gehäuseteil
12 Flanschteil, insbesondere Lagerflansch
13 Lager
14 Mutter
40 Dichtungselement
41 inneres Mitnehmerteil
42 Zwischenschicht
43 äußeres Mitnehmerteil
60 Dichtungselement
61 Nasenbereich
62 Dichtring
63 Vertiefung, insbesondere in Umfangsrichtung umlaufende ringförmige Vertiefung
64 Vertiefung, insbesondere in Umfangsrichtung umlaufende ringförmige Vertiefung

## Patentansprüche

1. Bremsanordnung für einen Elektromotor,
wobei die Bremsanordnung
- einen Bremsbelagträger (3),
- eine Welle,
- einen Magnetkörper (4),
- eine Wicklung,
- ein Gehäuseteil (11) mit Bremsfläche,
- eine Ankerscheibe (9) und
einen Mitnehmer (1)
aufweist,
wobei der Bremsbelagträger (3) und die Ankerscheibe (9) axial zwischen dem Gehäuseteil (11) und dem Magnetkörper (4) angeordnet sind,
**wobei** ein Dichtungselement (40, 60) in einem ersten axialen Bereich mit dem Gehäuseteil (11) und in einem zweiten axialen Bereich mit dem Magnetkörper (4) verbunden ist,
wobei das Dichtungselement (40, 60) die Ankerscheibe (9) und den Bremsbelagträger (3) radial umgibt, insbesondere den die Ankerscheibe (9) und den Bremsbelagträger (3) aufnehmenden Raumbereich zur Umgebung hin abdeckt und/oder abdichtet,
wobei am Dichtungselement (40, 60) **ein nach radial innen hervorragender Nasenbereich (61) ausgeformt ist, welcher die Ankerscheibe (9) in axialer Richtung begrenzt, dadurch gekennzeichnet, dass**
der **Mitnehmer (1) ein inneres und ein äußeres Mitnehmerteil (41, 43) aufweist, welche mittels einer Zwischenschicht (42) miteinander verbunden sind,**
**wobei der Bremsbelagträger (3) eine Innenverzahnung aufweist, welche mit einer Außenverzahnung des äußeren Mitnehmerteils im Eingriff ist, so dass der Bremsbelagträger (3) drehfest aber axial verschiebbar mit dem Mitnehmer** (1) verbunden ist,
**wobei das innere Mitnehmerteil (41) drehfest, insbesondere mittels Passfederverbindung, mit der Welle verbunden ist, insbesondere spielfrei verbunden ist.**

2. Bremsanordnung nach Anspruch 1,
**dadurch gekennzeichnet, dass**
am Magnetkörper (4) ein Dichtring angeordnet ist, welcher die Ankerscheibe (9) entgegen der axialen Richtung begrenzt,
insbesondere wobei der Dichtring in einer im Magnetkörper (4) eingebrachten Ringnut aufgenommen ist.

3. Bremsanordnung nach mindestens einem der vorangegangenen Ansprüche,
**dadurch gekennzeichnet, dass**
das Dichtungselement (40, 60) an seinen beiden axialen Endbereichen jeweils eine in Umfangsrichtung umlaufende radial gerichtete Vertiefung (63, 64), insbesondere Wandstärkeverdünnung, aufweist zur jeweiligen Aufnahme eines ringartigen Klemmelements, insbesondere Klemmring, Schelle oder Spannring.

4. Bremsanordnung nach mindestens einem der vorangegangenen Ansprüche,
**dadurch gekennzeichnet, dass**
die vom Dichtring erzeugte, auf die Ankerscheibe (9) wirkende Federkraft betragsmäßig größer ist als die vom elastisch gespannten, insbesondere vorgespannten, Nasenbereich (61) erzeugte, auf die Ankerscheibe (9) wirkende Federkraft,
insbesondere bei gelüftetem Zustand der Bremsanordnung, insbesondere also bestromter Wicklung,
und/oder dass
der vom Dichtungselement (40, 60), insbesondere vom Nasenbereich (61) des Dichtungselements (40, 60), überdeckte Radialabstandsbereich mit dem von der Ankerscheibe (9) überdeckten Radialabstandsbereich überlappt,
und/oder dass
der vom Dichtungselement (40, 60), insbesondere vom Nasenbereich (61) des Dichtungselements (40, 60), überdeckte axiale Bereich mit dem von dem Bremsbelagträger (3) überdeckten axialen Bereich überlappt und/oder an den von der Ankerscheibe (9) überdeckten axialen Bereich angrenzt, insbesondere ohne Überlappung.

5. Bremsanordnung nach mindestens einem der vorangegangenen Ansprüche,
**dadurch gekennzeichnet, dass**
der Nasenbereich (61) ringförmig und/oder in Umfangsrichtung umlaufend ausgebildet ist, insbesondere wobei die Ringachse des ringartigen Nasenbereichs (61) die Drehachse der Welle ist und/oder insbesondere wobei die Symmetrieachse des Nasenbereichs (61) die Drehachse der Welle ist.

6. Bremsanordnung nach mindestens einem der vorangegangenen Ansprüche,
**dadurch gekennzeichnet, dass**
**der Dichtring** auf einem Radialabstand, insbesondere auf dem größten Radialabstand, angeordnet ist, welcher in dem von der Ankerscheibe (9) überdeckten Radialabstandsbereich angeordnet ist.

7. Bremsanordnung nach mindestens einem der vorangegangenen Ansprüche,
**dadurch gekennzeichnet, dass**
**das innere Mitnehmerteil, das äußere Mitnehmerteil, die Zwischenschicht (42) und/oder der Mitnehmer (1) jeweils als Ringteil ausgeführt ist.**

8. Bremsanordnung nach mindestens einem der vorangegangenen Ansprüche,
**dadurch gekennzeichnet, dass**
der Mitnehmer (1) **das innere** Mitnehmerteil (41) und **das äußere** Mitnehmerteil (43) sowie **die** radial zwischen innerem und äußerem Mitnehmerteil (41, 43) angeordnete Zwischenschicht (42) aufweist,
insbesondere wobei das innere Mitnehmerteil (41) und das äußere Mitnehmerteil (43) voneinander beabstandet sind und/oder wobei das innere und das äußere Mitnehmerteil (41, 43) jeweils ringförmig ausgebildet ist und/oder wobei das innere Mitnehmerteil (41, 43) radial innerhalb des äußeren Mitnehmerteils angeordnet ist.

9. Bremsanordnung nach mindestens einem der vorangegangenen Ansprüche,
**dadurch gekennzeichnet, dass**
das innere Mitnehmerteil (41) nach radial außen, insbesondere in die Zwischenschicht (42), hervorragende Stegbereiche aufweist
und/oder dass
das äußere Mitnehmerteil (43) nach radial innen, insbesondere in die Zwischenschicht (42), hervorragende Stegbereiche aufweist.

10. Bremsanordnung nach mindestens einem der vorangegangenen Ansprüche,
**dadurch gekennzeichnet, dass**
die Zwischenschicht (42) aus einem Kunststoff, insbesondere aus einer Vergussmasse, aus einem Klebstoff, aus einem Polymer und/oder aus einem Elastomer, gefertigt ist und/oder die beiden Mitnehmerteile aus Metall, insbesondere Stahl, gefertigt sind,
und/oder dass
der von dem äußeren Mitnehmerteil, insbesondere der von den Stegbereichen des äußeren Mitnehmerteils, überdeckte Radialabstandsbereich überlappt mit dem von dem inneren Mitnehmerteil, insbesondere mit dem von den Stegbereichen des inneren Mitnehmerteils, überdeckten Radialabstandsbereich.

11. Bremsanordnung nach mindestens einem der vorangegangenen Ansprüche,
**dadurch gekennzeichnet, dass**
die Bremsanordnung
- einen Magnetkörper (4)
- eine Wicklung
- zumindest einen Bolzen (6)
- ein Gehäuseteil (11) mit Bremsfläche
- eine Ankerscheibe (9)
- zumindest ein Federteil (10), insbesondere eine Gegenfeder,
- zumindest eine erste Buchse (7)
aufweist,
wobei das Gehäuseteil (11) mit dem Magnetkörper (4) mittels des Bolzens (6), insbesondere zumindest in Umfangsrichtung formschlüssig, verbunden ist,
wobei die erste Buchse (7) in einer zweiten Buchse (8) aufgenommen ist, insbesondere in die zweite Buchse (8) eingepresst ist,
wobei das am Gehäuseteil (11) abgestützte Federteil (10) die erste Buchse (7) und/oder die zweite Buchse (8) zum Magnetkörper (4) hindrückt,
wobei der von der Ankerscheibe (9) überdeckte Radialabstandsbereich den von der zweiten Buchse (8) überdeckten Radialabstandsbereich enthält, insbesondere umfasst,
wobei der von der Ankerscheibe (9) überdeckte axiale Bereich den von der zweiten Buchse (8) überdeckten axialen Bereich enthält, insbesondere umfasst, oder mit ihm überlappt.

12. Bremsanordnung nach Anspruch 11,
**dadurch gekennzeichnet, dass**
die erste Buchse (7) aus einem weicheren und/oder elastischeren Material gefertigt ist als die zweite Buchse (8),
und/oder dass
die erste Buchse (7) aus Gummi, einem gummierten Stoff oder einem Kunststoff, insbesondere einem Polymer, gefertigt ist und die zweite Buchse (8) aus einem Metall, insbesondere aus Stahl, gefertigt ist,
und/oder dass
die erste Buchse (7) in die zweite Buchse (8) eingepresst ist,
insbesondere wobei die erste Buchse (7) ein O-Ring ist,
und/oder dass
die erste Buchse (7) am Bolzen (6) gleitgelagert ist, insbesondere also passgenau auf den Bolzen (6) aufgesteckt ist,
und/oder dass
die Ankerscheibe (9) in Umfangsrichtung spielbehaftet formschlüssig mit der zweiten Buchse (8) und/oder dem Bolzen (6) verbunden ist.

13. Bremsanordnung **nach Anspruch 11 oder 12,**
**dadurch gekennzeichnet, dass**
der Bolzen (6) mit dem Gehäuseteil (11) schraubverbunden ist und durch eine axial durch den Magnetkörper (4) durchgehende Ausnehmung durchgeführt ist,
insbesondere wobei eine Mutter (14) auf einen Gewindebereich aufgeschraubt ist, welcher auf der vom Gehäuseteil (11) abgewandten Seite des Magnetkörpers (4) angeordnet ist,
insbesondere wobei der Bolzen (6) eine Stufe aufweist, mit welcher er an einer Stufe einer Stufenbohrung im Gehäuseteil (11) anliegt
oder dass
der Bolzen (6) mit dem Magnetkörper (4) schraubverbunden ist und durch eine axial durch das Gehäuseteil (11) durchgehende Ausnehmung durchgeführt ist,
insbesondere wobei eine Mutter (14) auf einen Gewindebereich aufgeschraubt ist, welcher auf der vom Magnetkörper (4) abgewandten Seite des Gehäuseteils (11) angeordnet ist,
insbesondere wobei der Bolzen (6) eine Stufe aufweist, mit welcher er an einer Stufe einer Stufenbohrung im Magnetkörper (4) anliegt.

14. Bremsanordnung **nach Anspruch 11, 12 oder 13,**
**dadurch gekennzeichnet, dass**
in einer Ausnehmung des Magnetkörpers (4) die Wicklung aufgenommen ist,
und/oder wobei die Ankerscheibe (9) axiale bewegbar, spielbehaftet drehfest mit dem Magnetkörper (4), insbesondere mit dem Bolzen (6), verbunden ist,
und/oder dass
eine am Magnetkörper (4) abgestützte Feder die Ankerscheibe (9) vom Magnetkörper (4) wegdrückt, insbesondere also in axialer Richtung hin zum Bremsbelagträger (3),
wobei bei Bestromung der Ringwicklung die Ankerscheibe (9) zum Magnetkörper (4) unter Überwindung der von der Feder erzeugte Federkraft hingezogen wird,
und wobei bei Nichtbestromung die Ankerscheibe (9) von der Feder auf den Bremsbelagträger (3), insbesondere auf einen auf der der Ankerscheibe (9) zugewandten Seite des Bremsbelagträgers (3) angeordneten Bremsbelag gedrückt wird,
insbesondere so, dass der Bremsbelagträger (3) insbesondere mit seinem anderen Bremsbelag auf das Gehäuseteil (11), insbesondere auf eine am Gehäuseteil (11) ausgebildete Bremsfläche, gedrückt wird,
und/oder dass
das Gehäuseteil (11) mit einem Flanschteil (12) dicht und lösbar verbunden wird, welches ein Lager (13) zur Lagerung der Welle aufnimmt.

15. Bremsanordnung **nach einem der Ansprüche 11 bis 14,**
**dadurch gekennzeichnet, dass**
der von der zweiten Buchse (8) überdeckte axiale Bereich kleiner ist als der von der ersten Buchse (7) überdeckte axiale Bereich und das Federteil (10) die erste Buchse (7) auf den Magnetkörper (4) hindrückt,
oder dass
der von der zweiten Buchse (8) überdeckte axiale Bereich gleich oder größer ist als der von der ersten Buchse (7) überdeckte axiale Bereich und das Federteil (10) die zweite Buchse (8) auf den Magnetkörper (4) hindrückt.

16. Elektromotor mit Bremsanordnung **nach Anspruch 14,**
**dadurch gekennzeichnet, dass**
die Welle in dem im Flanschteil (12) aufgenommenen Lager (13) und in einem weiteren Lager gelagert ist, welches in einem weiteren Flanschteil (12) aufgenommen ist, wobei die Flanschteile mit einem Statorgehäuse des Motors verbunden sind,
insbesondere wobei die Welle die Rotorwelle (2) des Motors ist.

## Claims

1. A braking arrangement for an electric motor,
wherein the braking arrangement has
- a brake lining carrier (3),
- a shaft,
- a magnet body (4),
- a winding,
- a housing part (11) with braking face,
- an armature disc (9) and
- a driving element (1),
wherein the brake lining carrier (3) and the armature disc (9) are arranged axially between the housing part (11) and the magnet body (4),
wherein a seal element (40, 60) in a first axial region is connected to the housing part (11) and in a second axial region is connected to the magnet body (4),
wherein the seal element (40, 60) radially surrounds the armature disc (9) and the brake lining carrier (3), in particular covers and/or seals off the spatial region accommodating the armature disc (9) and the brake lining carrier (3) from the surroundings,
wherein a nose region (61) protruding radially inwards which limits the armature disc (9) in the axial direction is formed on the seal element (40, 60),
**characterised in that**
the driving element (1) has an inner and an outer driving element part (41, 43) which are connected together by means of an intermediate layer (42),
the brake lining carrier (3) having internal gearing which is engaged with external gearing of the outer driving element part, so that the brake lining carrier (3) is connected non-rotatably but axially displaceably to the driving element (1),
the inner driving element part (41) being connected non-rotatably, in particular by means of a feather-key connection, to the shaft, in particular being connected without play.

2. A braking arrangement according to claim 1,
**characterised in that**
on the magnet body (4) there is arranged a sealing ring which limits the armature disc (9) counter to the axial direction,
in particular with the sealing ring being accommodated in an annular groove formed in the magnet body (4).

3. A braking arrangement according to at least one of the preceding claims,
**characterised in that**
the seal element (40, 60) has at both its axial end regions in each case a radially directed indentation (63, 64), in particular reduced wall thickness, which runs around in the peripheral direction to accommodate in each case a ring-like clamping element, in particular clamping ring, clip or tensioning ring.

4. A braking arrangement according to at least one of the preceding claims,
**characterised in that**
the spring force generated by the sealing ring and acting on the armature disc (9) is greater in terms of amount than the spring force generated by the elastically tensioned, in particular pre-tensioned, nose region (61) and acting on the armature disc (9),
in particular in the released state of the braking arrangement, in particular therefore when the winding is energised,
and/or **in that**
the radial distance region covered by the seal element (40, 60), in particular by the nose region (61) of the seal element (40, 60), overlaps with the radial distance region covered by the armature disc (9),
and/or **in that**
the axial region covered by the seal element (40, 60), in particular by the nose region (61) of the seal element (40, 60), overlaps with the axial region covered by the brake lining carrier (3) and/or adjoins the axial region covered by the armature disc (9), in particular without overlapping.

5. A braking arrangement according to at least one of the preceding claims,
**characterised in that**
the nose region (61) is formed as annular and/or as running around in the peripheral direction, in particular with the ring axis of the ring-like nose region (61) being the axis of rotation of the shaft and/or in particular with the axis of symmetry of the nose region (61) being the axis of rotation of the shaft.

6. A braking arrangement according to at least one of the preceding claims,
**characterised in that**
the sealing ring is arranged at a radial distance, in particular at the greatest radial distance, which is arranged in the radial distance region covered by the armature disc (9).

7. A braking arrangement according to at least one of the preceding claims,
**characterised in that**
the inner driving element part, the outer driving element part, the intermediate layer (42) and/or the driving element (1) are in each case embodied as a ring part.

8. A braking arrangement according to at least one of the preceding claims,
**characterised in that**
the driving element (1) has the inner driving element part (41) and the outer driving element part (43) and also the intermediate layer (42) arranged radially between the inner and outer driving element parts (41, 43),
in particular with the inner driving element part (41) and the outer driving element part (43) being spaced apart from each other and/or with the inner and the outer driving element parts (41, 43) being in each case formed as annular and/or with the inner driving element part (41, 43) being arranged radially within the outer driving element part.

9. A braking arrangement according to at least one of the preceding claims,
**characterised in that**
the inner driving element part (41) has land regions protruding radially outwards, in particular into the intermediate layer (42),
and/or **in that**
the outer driving element part (43) has land regions protruding radially inwards, in particular into the intermediate layer (42).

10. A braking arrangement according to at least one of the preceding claims,
**characterised in that**
the intermediate layer (42) is manufactured from a plastics material, in particular from a potting compound, an adhesive, a polymer and/or an elastomer, and/or the two driving element parts are manufactured from metal, in particular steel,
and/or **in that**
the radial distance region covered by the outer driving element part, in particular covered by the land regions of the outer driving element part, overlaps with the radial distance region covered by the inner driving element part, in particular covered by the land regions of the inner driving element part.

11. A braking arrangement according to at least one of the preceding claims,
**characterised in that**
the braking arrangement has
- a magnet body (4)
- a winding
- at least one bolt (6)
- a housing part (11) with braking face
- an armature disc (9)
- at least one spring part (10), in particular a counter-spring,
- at least one first bush (7),
the housing part (11) being connected to the magnet body (4) by means of the bolt (6), in particular in a form-fit at least in the peripheral direction,
the first bush (7) being accommodated in a second bush (8), in particular being pressed into the second bush (8),
the spring part (10), which is supported on the housing part (11), pressing the first bush (7) and/or the second bush (8) towards the magnet body (4),
the radial distance region covered by the armature disc (9) containing, in particular comprising, the radial distance region covered by the second bush (8),
the axial region covered by the armature disc (9) containing, in particular comprising, the axial region covered by the second bush (8) or overlapping with it.

12. A braking arrangement according to claim 11,
**characterised in that**
the first bush (7) is manufactured from a softer and/or more elastic material than the second bush (8),
and/or **in that**
the first bush (7) is manufactured from rubber, a rubberised material or a plastics material, in particular a polymer, and the second bush (8) is manufactured from a metal, in particular steel,
and/or **in that**
the first bush (7) is pressed into the second bush (8),
in particular with the first bush (7) being an O-ring,
and/or **in that**
the first bush (7) is mounted as a plain bearing on the bolt (6), in particular therefore is mounted with a precise fit on the bolt (6),
and/or **in that**
the armature disc (9) is connected in a form-fit with play in the peripheral direction to the second bush (8) and/or the bolt (6).

13. A braking arrangement according to claim 11 or 12,
**characterised in that**
the bolt (6) is screw-connected to the housing part (11) and is guided through a cutout which passes axially through the magnet body (4),
in particular with a nut (14) being screwed onto a threaded region which is arranged on that side of the magnet body (4) which faces away from the housing part (11),
in particular with the bolt (6) having a step with which it lies against a step of a stepped bore in the housing part (11)
or **in that**
the bolt (6) is screw-connected to the magnet body (4) and is guided through a cutout which passes axially through the housing part (11),
in particular with a nut (14) being screwed onto a threaded region which is arranged on that side of the housing part (11) which faces away from the magnet body (4),
in particular with the bolt (6) having a step with which it lies against a step of a stepped bore in the magnet body (4).

14. A braking arrangement according to claim 11, 12 or 13,
**characterised in that**
the winding is accommodated in a cutout in the magnet body (4),
and/or with the armature disc (9) being connected axially movably, with play and non-rotatably to the magnet body (4), in particular to the bolt (6),
and/or **in that**
a spring supported on the magnet body (4) presses the armature disc (9) away from the magnet body (4), in particular therefore in the axial direction towards the brake lining carrier (3),
with, when the ring winding is energised, the armature disc (9) being drawn towards the magnet body (4), overcoming the spring force generated by the spring,
and with, when it is non-energised, the armature disc (9) being pressed by the spring onto the brake lining carrier (3), in particular onto a brake lining arranged on that side of the brake lining carrier (3) which faces the armature disc (9),
in particular such that the brake lining carrier (3) is pressed in particular with its other brake lining onto the housing part (11), in particular onto a braking face formed on the housing part (11),
and/or **in that**
the housing part (11) is connected hermetically and detachably to a flange part (12) which accommodates a bearing (13) for bearing the shaft.

15. A braking arrangement according to one of claims 11 to 14,
**characterised in that**
the axial region covered by the second bush (8) is smaller than the axial region covered by the first bush (7) and the spring part (10) presses the first bush (7) towards the magnet body (4),
or **in that**
the axial region covered by the second bush (8) is equal to or larger than the axial region covered by the first bush (7) and the spring part (10) presses the second bush (8) towards the magnet body (4).

16. An electric motor with a braking arrangement according to claim 14,
**characterised in that**
the shaft is borne in the bearing (13) which is accommodated in the flange part (12) and in a further bearing which is accommodated in a further flange part (12), the flange parts being connected to a stator housing of the motor,
in particular with the shaft being the rotor shaft (2) of the motor.

## Revendications

1. Agencement de freinage pour un moteur électrique,
l'agencement de freinage présentant :
- un support de garniture de frein (3),
- un arbre,
- un corps magnétique (4),
- un enroulement,
- une partie boîtier (11) avec une surface de freinage,
- un disque d'induit (9) et un entraîneur (1),
dans lequel le support de garniture de frein (3) et le disque d'induit (9) sont disposés axialement entre la partie boîtier (11) et le corps magnétique (4),
dans lequel un élément d'étanchéité (40, 60) est relié dans une première zone axiale à la partie boîtier (11) et dans une deuxième zone axiale au corps magnétique (4),
dans lequel l'élément d'étanchéité (40, 60) entoure radialement le disque d'induit (9) et le support de garniture de frein (3), en particulier recouvre et/ou rend étanche par rapport à l'environnement la zone d'espace recevant le disque d'induit (9) et le support de garniture de frein (3),
dans lequel une zone de nez (61) faisant saillie radialement vers l'intérieur est formée sur l'élément d'étanchéité (40, 60), laquelle limite le disque d'induit (9) dans la direction axiale, **caractérisé en ce que**
l'entraîneur (1) présente une partie d'entraîneur intérieure et une partie d'entraîneur extérieure (41, 43) qui sont reliées entre elles au moyen d'une couche intermédiaire (42),
dans lequel le support de garniture de frein (3) présente une denture intérieure qui est en prise avec une denture extérieure de la partie d'entraîneur extérieure, de sorte que le support de garniture de frein (3) est relié à l'entraîneur (1) de manière solidaire en rotation mais mobile axialement,
dans lequel la partie d'entraîneur intérieure (41) est reliée, en particulier sans jeu, à l'arbre de manière solidaire en rotation, en particulier au moyen d'une liaison par clavette.

2. Agencement de freinage selon la revendication 1,
**caractérisé en ce que**
une bague d'étanchéité est disposée sur le corps magnétique (4), laquelle limite le disque d'induit (9) à l'encontre de la direction axiale,
en particulier dans lequel la bague d'étanchéité est reçue dans une rainure annulaire ménagée dans le corps magnétique (4).

3. Agencement de freinage selon au moins l'une des revendications précédentes,
**caractérisé en ce que**
l'élément d'étanchéité (40, 60) présente à chacune de ses deux zones d'extrémité axiales un renfoncement (63, 64) orienté radialement et s'étendant tout autour dans la direction circonférentielle, en particulier un amincissement d'épaisseur de paroi, pour recevoir respectivement un élément de serrage de type annulaire, en particulier une bague de serrage, un collier ou un anneau tendeur.

4. Agencement de freinage selon au moins l'une des revendications précédentes,
**caractérisé en ce que**
la force élastique générée par la bague d'étanchéité et agissant sur le disque d'induit (9) est supérieure en valeur absolue à la force élastique générée par la zone de nez (61) contrainte élastiquement, en particulier précontrainte, et agissant sur le disque d'induit (9),
en particulier lorsque l'agencement de freinage est à l'état desserré, donc en particulier lorsque l'enroulement est alimenté en courant,
et/ou que
la zone de distance radiale recouverte par l'élément d'étanchéité (40, 60), en particulier par la zone de nez (61) de l'élément d'étanchéité (40, 60), se chevauche avec la zone de distance radiale recouverte par le disque d'induit (9),
et/ou que
la zone axiale recouverte par l'élément d'étanchéité (40, 60), en particulier par la zone de nez (61) de l'élément d'étanchéité (40, 60), se chevauche avec la zone axiale recouverte par le support de garniture de frein (3) et/ou est adjacente à la zone axiale recouverte par le disque d'induit (9), en particulier sans chevauchement.

5. Agencement de freinage selon au moins l'une des revendications précédentes,
**caractérisé en ce que**
la zone de nez (61) est de forme annulaire et/ou s'étend tout autour dans la direction circonférentielle, en particulier dans lequel l'axe d'anneau de la zone de nez (61) de type annulaire est l'axe de rotation de l'arbre et/ou en particulier dans lequel l'axe de symétrie de la zone de nez (61) est l'axe de rotation de l'arbre.

6. Agencement de freinage selon au moins l'une des revendications précédentes,
**caractérisé en ce que**
la bague d'étanchéité est disposée sur une distance radiale, en particulier sur la plus grande distance radiale, qui est disposée dans la zone de distance radiale recouverte par le disque d'induit (9).

7. Agencement de freinage selon au moins l'une des revendications précédentes,
**caractérisé en ce que**
la partie d'entraîneur intérieure, la partie d'entraîneur extérieure, la couche intermédiaire (42) et/ou l'entraîneur (1) sont chacun réalisés sous la forme d'une pièce annulaire.

8. Agencement de freinage selon au moins l'une des revendications précédentes,
**caractérisé en ce que**
l'entraîneur (1) présente la partie d'entraîneur intérieure (41) et la partie d'entraîneur extérieure (43) ainsi que la couche intermédiaire (42) disposée radialement entre les parties d'entraîneur intérieure et extérieure (41, 43),
en particulier dans lequel la partie d'entraîneur intérieure (41) et la partie d'entraîneur extérieure (43) sont espacées l'une de l'autre et/ou dans lequel les parties d'entraîneur intérieure et extérieure (41, 43) sont respectivement de forme annulaire et/ou dans lequel la partie d'entraîneur intérieure (41, 43) est disposée radialement à l'intérieur de la partie d'entraîneur extérieure.

9. Agencement de freinage selon au moins l'une des revendications précédentes,
**caractérisé en ce que**
la partie d'entraîneur intérieure (41) présente des zones de nervure faisant saillie radialement vers l'extérieur, en particulier dans la couche intermédiaire (42)
et/ou que
la partie d'entraîneur extérieure (43) présente des zones de nervure faisant saillie radialement vers l'intérieur, en particulier dans la couche intermédiaire (42).

10. Agencement de freinage selon au moins l'une des revendications précédentes,
**caractérisé en ce que**
la couche intermédiaire (42) est fabriquée dans une matière plastique, en particulier une masse de scellement, une colle, un polymère et/ou un élastomère, et/ou les deux parties d'entraîneur sont fabriquée en métal, en particulier en acier,
et/ou que
la zone de distance radiale recouverte par la partie d'entraîneur extérieure, en particulier la zone de distance radiale recouverte par les zones de nervure de la partie d'entraîneur extérieure, se chevauche avec la zone de distance radiale recouverte par la partie d'entraîneur intérieure, en particulier avec la zone de distance radiale recouverte par les zones de nervure de la partie d'entraîneur intérieure.

11. Agencement de freinage selon au moins l'une des revendications précédentes,
**caractérisé en ce que**
l'agencement de freinage présente :
- un corps magnétique (4)
- un enroulement
- au moins un boulon (6)
- une partie boîtier (11) avec une surface de freinage
- un disque d'induit (9)
- au moins une pièce élastique (10), en particulier un ressort de rappel,
- au moins une première douille (7),
dans lequel la partie boîtier (11) est reliée au corps magnétique (4) au moyen du boulon (6), en particulier par complémentarité de forme au moins dans la direction circonférentielle,
dans lequel la première douille (7) est reçue dans une deuxième douille (8), en particulier est pressée dans la deuxième douille (8),
dans lequel la pièce élastique (10) prenant appui sur la partie boîtier (11) pousse la première douille (7) et/ou la deuxième douille (8) vers le corps magnétique (4),
dans lequel la zone de distance radiale recouverte par le disque d'induit (9) contient, en particulier comprend, la zone de distance radiale recouverte par la deuxième douille (8),
dans lequel la zone axiale recouverte par le disque d'induit (9) contient, en particulier comprend, la zone axiale recouverte par la deuxième douille (8) ou se chevauche avec elle.

12. Agencement de freinage selon la revendication 11,
**caractérisé en ce que**
la première douille (7) est fabriquée dans un matériau plus souple et/ou plus élastique que la deuxième douille (8),
et/ou que
la première douille (7) est fabriquée en caoutchouc, dans une matière caoutchoutée ou une matière plastique, en particulier un polymère, et la deuxième douille (8) est fabriquée en métal, en particulier en acier,
et/ou que
la première douille (7) est pressée dans la deuxième douille (8),
en particulier dans lequel la première douille (7) est un joint torique,
et/ou que
la première douille (7) est montée à coulissement sur le boulon (6), en particulier est donc emboîtée de manière parfaitement ajustée sur le boulon (6),
et/ou que
le disque d'induit (9) est relié par complémentarité de forme avec jeu dans la direction circonférentielle à la deuxième douille (8) et/ou au boulon (6).

13. Agencement de freinage selon la revendication 11 ou la revendication 12,
**caractérisé en ce que**
le boulon (6) est relié par vissage à la partie boîtier (11) et passe à travers un évidement traversant axialement le corps magnétique (4),
en particulier dans lequel un écrou (14) est vissé sur une zone filetée qui est disposée du côté du corps magnétique (4) opposé à la partie boîtier (11),
en particulier dans lequel le boulon (6) présente un gradin par lequel il s'appuie sur un gradin d'un alésage étagé dans la partie boîtier (11)
ou que
le boulon (6) est relié par vissage au corps magnétique (4) et passe à travers un évidement traversant axialement la partie boîtier (11),
en particulier dans lequel un écrou (14) est vissé sur une zone filetée qui est disposée du côté de la partie boîtier (11) opposé au corps magnétique (4),
en particulier dans lequel le boulon (6) présente un gradin par lequel il s'applique contre un gradin d'un alésage étagé dans le corps magnétique (4).

14. Agencement de freinage selon l'une des revendications 11, 12 ou 13,
**caractérisé en ce que**
l'enroulement est reçu dans un évidement du corps magnétique (4),
et/ou dans lequel le disque d'induit (9) est relié au corps magnétique (4), en particulier au boulon (6), de manière mobile axialement et solidaire en rotation avec jeu,
et/ou que
un ressort appuyé sur le corps magnétique (4) repousse le disque d'induit (9) du corps magnétique (4), en particulier donc dans la direction axiale vers le support de garniture de frein (3),
dans lequel le disque d'induit (9) est attiré vers le corps magnétique (4) en surmontant la force élastique générée par le ressort lorsque l'enroulement annulaire est alimenté en courant,
et dans lequel, en l'absence d'alimentation en courant, le disque d'induit (9) est pressé par le ressort sur le support de garniture de frein (3), en particulier sur une garniture de frein disposée du côté du support de garniture de frein (3) tourné vers le disque d'induit (9),
en particulier de telle sorte que le support de garniture de frein (3) soit pressé, en particulier avec son autre garniture de frein, sur la partie boîtier (11), en particulier sur une surface de freinage formée sur la partie boîtier (11),
et/ou que
la partie boîtier (11) est reliée de manière étanche et amovible à une partie bride (12) qui reçoit un palier (13) pour le support de l'arbre.

15. Agencement de freinage selon l'une des revendications 11 à 14,
**caractérisé en ce que**
la zone axiale recouverte par la deuxième douille (8) est plus petite que la zone axiale recouverte par la première douille (7) et la pièce élastique (10) pousse la première douille (7) vers le corps magnétique (4),
ou que
la zone axiale recouverte par la deuxième douille (8) est égale ou plus grande que la zone axiale recouverte par la première douille (7) et la pièce élastique (10) pousse la deuxième douille (8) vers le corps magnétique (4).

16. Moteur électrique doté d'un agencement de freinage selon la revendication 14,
**caractérisé en ce que**
l'arbre est monté dans le palier (13) reçu dans la partie bride (12) et dans un autre palier qui est reçu dans une autre partie bride (12), dans lequel les parties bride sont reliées à un boîtier de stator du moteur,
en particulier dans lequel l'arbre est l'arbre de rotor (2) du moteur.
